# DEMANDE DE BREVET EUROPEEN

(11) **EP 4 411 493 A1**
(43) Date de publication de la demande: **07.08.2024**
(21) Numéro de dépôt: 23212091.5
(22) Date de dépôt: 24.11.2023
(51) Int. Cl.: G05B 15/02

(54) **PROCÉDÉ DE GESTION D'UNE INSTALLATION DOMOTIQUE**

(30) Priorité: 25.11.2022 FR 2212369
(71) Demandeur: Somfy Activites SA, 74300 Cluses (FR)
(72) Inventeur: GBEHOUNOU, Syntyche, 74300 Cluses (FR); BOULLY, Mathieu, 74300 Cluses (FR)
(74) Mandataire: Novaimo

(57) **Abrégé**

Procédé de configuration d'un calculateur (4) d'une installation domotique (100) ou d'un capteur domotique ou d'un appareil domotique (3) ou d'un système de gestion (2), le calculateur embarquant un module (43) de logique à réseau de neurones artificiels, le procédé comprenant :
- une étape de fonctionnement du réseau de neurones alimenté par des données de températures,
- une étape de fonctionnement d'un système de référence donnant un état de fonctionnement d'un système (110) de chauffage et/ou de climatisation, et
- une étape de modification de paramètres de fonctionnement du réseau de neurones en fonction de l'état de fonctionnement du système (110) de chauffage et/ou de climatisation donné par le système de référence.

## Description

La présente invention concerne un procédé de gestion d'une installation domotique. L'invention concerne aussi un procédé de configuration d'un calculateur utilisé dans un tel procédé de gestion. L'invention concerne aussi un système de gestion mettant en oeuvre un tel procédé de gestion. L'invention concerne encore une installation domotique comprenant un tel système de gestion. L'invention concerne enfin un programme d'ordinateur, un support d'enregistrement de données et un signal d'un support de données en lien avec le procédé de gestion.

Dans le domaine des installations domotiques, certains appareils domotiques peuvent avoir, notamment de manière passive (c'est-à-dire suivant leur état et sans utiliser d'énergie, dans un même ordre de grandeur, que celle qui leur a permis d'être conduit dans cet état, par exemple un état fermé ou un état ouvert pour un store ou un volet), une influence très importante sur le bilan thermique du bâtiment qu'ils équipent. Ceci est en particulier le cas des appareils de fermeture, d'occultation, de protection solaire ou d'écran qui équipent le bâtiment au niveau d'ouvertures de celui-ci. En effet, ces appareils domotiques dits en lien avec l'enveloppe du bâtiment peuvent, selon leur état d'ouverture/fermeture, influencer :
- les apports d'énergie thermique par rayonnement solaire dans le bâtiment, et/ou
- les déperditions thermiques, plus généralement les échanges thermiques entre l'intérieur et l'extérieur du bâtiment.

A titre d'exemples :
- un store extérieur fermé en été peut limiter ou bloquer les apports thermiques au bâtiment par rayonnement solaire au travers d'une ouverture vitrée du bâtiment,
- un store extérieur ouvert en hiver permet les apports thermiques au bâtiment par rayonnement solaire au travers d'une ouverture vitrée du bâtiment,
- un volet extérieur fermé la nuit en hiver peut constituer une isolation permettant de limiter les déperditions thermiques de l'intérieur du bâtiment vers l'extérieur, tout en autorisant les apports thermiques au bâtiment par rayonnement solaire au travers d'une ouverture vitrée du bâtiment lorsqu'il est ouvert dans la journée.

Les apports ou retraits d'énergie thermique dans un bâtiment peuvent également être gérés par le biais d'autres équipements tels qu'un système de chauffage et/ou de climatisation du bâtiment. Ces équipements, qui doivent être actifs pour influencer la thermique dans le bâtiment, sont distincts des appareils domotiques liés à l'enveloppe du bâtiment définis ci-dessus. Ces équipements pourront être nommés équipements actifs par la suite.

Il apparaît en conséquence primordial de commander de manière coordonnée les appareils domotiques d'un bâtiment et le système de chauffage et/ou de climatisation du bâtiment dans le but d'optimiser le confort et la consommation d'énergie.

Cette commande coordonnée peut être complexe à réaliser à plusieurs titres. D'une part, par exemple, dans certaines situations, des critères d'optimisation du confort de l'utilisateur du bâtiment et de la consommation d'énergie peuvent mener à des commandes contradictoires, par exemple mener à :
- une commande d'ouverture d'un appareil domotique lié à l'enveloppe d'un bâtiment pour satisfaire un critère de confort visuel, et
- une commande de fermeture de cet appareil domotique pour satisfaire un critère d'économie d'énergie.
D'autre part, la commande des appareils domotiques liés à l'enveloppe d'un bâtiment nécessite idéalement de connaître l'état d'activation des équipements tels que le système de chauffage et/ou de climatisation. En effet, il est important de commander les appareils domotiques de manière cohérente avec l'état d'activation du système de chauffage et/ou de climatisation.

Une telle commande cohérente est aisée quand tous les dispositifs (appareils domotiques liés à l'enveloppe du bâtiment et autres équipements actifs) sont intégrés dans l'installation domotique sous la forme de dispositifs communicants et peuvent largement échanger des informations les uns avec les autres. Toutefois, dans certaines installations domotiques les capacités de communications des dispositifs les uns avec les autres sont très limitées de sorte que par exemple:
- le système de chauffage et/ou de climatisation ne peut pas émettre une information portant sur son état d'activation à destination d'un appareil domotique lié à l'enveloppe d'un bâtiment, et/ou
- l'appareil domotique lié à l'enveloppe d'un bâtiment ne peut pas recevoir une information portant sur l'état d'activation du système de chauffage et/ou de climatisation.

La présente invention a pour but de résoudre les inconvénients précités et de proposer un procédé de gestion améliorant les procédés de gestion connus. En particulier, le procédé de gestion selon l'invention permet de connaître l'état d'activation d'un équipement actif tel qu'un système de chauffage et/ou de climatisation dans un bâtiment sans que ce système n'ait à émettre une information à ce sujet et d'utiliser cette connaissance acquise de l'état d'activation pour la commande des appareils domotiques lié à l'enveloppe d'un bâtiment.

Selon l'invention, un procédé permet la configuration d'un calculateur d'une installation domotique ou d'un capteur domotique ou d'un appareil domotique ou d'un système de gestion. Le calculateur embarque un module de logique à réseau de neurones artificiels. Le procédé de configuration comprend :
- une étape de fonctionnement du réseau de neurones alimenté par des données de températures,
- une étape de fonctionnement d'un système de référence donnant un état de fonctionnement d'un système de chauffage et/ou de climatisation, et
- une étape de modification de paramètres de fonctionnement du réseau de neurones en fonction de l'état de fonctionnement du système de chauffage et/ou de climatisation donné par le système de référence.

Selon l'invention, un procédé permet la gestion d'une installation domotique équipant un bâtiment et comprenant au moins un appareil domotique lié à une enveloppe du bâtiment, comme un appareil de fermeture, d'occultation, de protection solaire ou d'écran. Le bâtiment est équipé :
- d'un capteur de température interne au bâtiment, et
- d'un système de chauffage et/ou de climatisation du bâtiment.
Le procédé de gestion comprend :
- une étape d'acquisition de données de température mesurées par le capteur,
- une étape d'analyse des données de température,
- une étape de détermination d'un état de fonctionnement du système de chauffage et/ou de climatisation du bâtiment, et
- une étape de commande de l'au moins un appareil domotique en fonction du résultat de l'étape de détermination de l'état de fonctionnement du système de chauffage et/ou de climatisation du bâtiment.

L'étape d'analyse peut comprendre le traitement, par un module de logique à réseau de neurones artificiels, des données de température mesurées.

Le réseau de neurones artificiels peut être du type perceptron multicouche ou du type forêts aléatoires (Random Forest Classifier).

Le réseau de neurones artificiels peut comprendre :
- des couches cachées mettant en oeuvre des fonctions d'activation de type ReLU, et/ou
- une couche de sortie mettant en oeuvre une fonction d'activation de type sigmoïde.

Le réseau de neurones artificiels peut être du type convolutif.

L'étape de détermination peut être configurée de sorte à obtenir :
- une probabilité d'état actif du système de chauffage et/ou de climatisation, et/ou
- une probabilité d'état inactif du système de chauffage et/ou de climatisation, et/ou
- une probabilité d'indétermination d'état actif ou non actif du système de chauffage et/ou de climatisation.

L'étape de détermination peut comprendre une comparaison d'une probabilité d'état du système de chauffage et/ou de climatisation à un seuil et l'état du système de chauffage et/ou de climatisation peut être considéré comme actif ou non actif en fonction du résultat de la comparaison.

L'étape de détermination peut comprendre la détermination de :
- une probabilité d'état actif du système de chauffage, et/ou
- une probabilité d'état actif du système de climatisation, et/ou
- une probabilité d'état inactif du système de chauffage, et/ou
- une probabilité d'état inactif du système de climatisation, et/ou
- une probabilité d'indétermination d'état actif ou non actif du système de chauffage, et/ou
- une probabilité d'indétermination d'état actif ou non actif du système de climatisation.

L'étape d'analyse des données de température peut comprendre l'analyse des données sur différents intervalles de temps, notamment sur des intervalles de 60 min, 120 min et 180 min.

Le procédé de gestion peut comprendre en outre une étape initiale de mise en oeuvre du procédé de configuration défini précédemment.

Dans l'étape d'acquisition de données de température, les données de températures acquises peuvent être mesurées par plusieurs capteurs disposés en différents lieux du bâtiment.

Selon l'invention, un calculateur est configuré par la mise en oeuvre du procédé de configuration défini précédemment.

Selon l'invention, un système de gestion d'une installation domotique comprend des éléments matériels et/ou logiciels mettant en oeuvre le procédé de gestion défini précédemment et/ou le procédé de configuration défini précédemment, notamment des éléments matériels et/ou logiciels conçus pour mettre en oeuvre le procédé de gestion défini précédemment et/ou le procédé de configuration défini précédemment.

Selon l'invention, un système de gestion d'une installation domotique comprend des moyens de mettre en oeuvre le procédé de gestion défini précédemment et/ou le procédé de configuration défini précédemment.

Selon l'invention, une installation domotique comprend un système de gestion défini précédemment.

Selon l'invention, un produit programme d'ordinateur comprend des instructions de code de programme enregistrées sur un support lisible par ordinateur pour mettre en oeuvre les étapes du procédé de gestion défini précédemment lorsque ledit programme fonctionne sur un ordinateur et/ou les étapes du procédé de configuration défini précédemment lorsque ledit programme fonctionne sur un ordinateur.

L'invention porte aussi sur un produit programme d'ordinateur téléchargeable depuis un réseau de communication et/ou enregistré sur un support de données lisible par un ordinateur et/ou exécutable par un ordinateur. Le produit programme d'ordinateur comprend des instructions qui, lorsque le programme est exécuté par l'ordinateur, conduisent celui-ci à mettre en oeuvre le procédé de gestion défini précédemment et/ou le procédé de configuration défini précédemment.

L'invention porte encore sur un support d'enregistrement de données, lisible par un ordinateur, sur lequel est enregistré un programme d'ordinateur comprenant des instructions de code de programme de mise en oeuvre du procédé de gestion défini précédemment et/ou le procédé de configuration défini précédemment.

L'invention porte encore sur un support d'enregistrement lisible par ordinateur comprenant des instructions qui, lorsqu'elles sont exécutées par un ordinateur, conduisent celui-ci à mettre en oeuvre le procédé de gestion défini précédemment et/ou le procédé de configuration défini précédemment.

L'invention porte enfin sur un signal d'un support de données, portant le produit programme d'ordinateur défini précédemment.

D'autres particularités et avantages de l'invention apparaîtront encore dans la description ci-après, faite en référence aux dessins annexés, donnés à titre d'exemples non limitatifs et dans lesquels :
la figure 1 est une vue d'un mode de réalisation d'une installation à laquelle l'invention peut être appliquée ;
la figure 2 est une vue d'un exemple appareil domotique de l'installation ;
la figure 3 est une autre vue schématique d'un mode de réalisation d'une installation selon l'invention ;
la figure 4 est un ordinogramme d'un mode d'exécution d'un procédé de gestion selon l'invention ;
la figure 5 est une illustration d'un premier mode d'exécution d'étapes du procédé de gestion ;
la figure 6 est une illustration d'un deuxième mode d'exécution d'étapes du procédé de gestion.

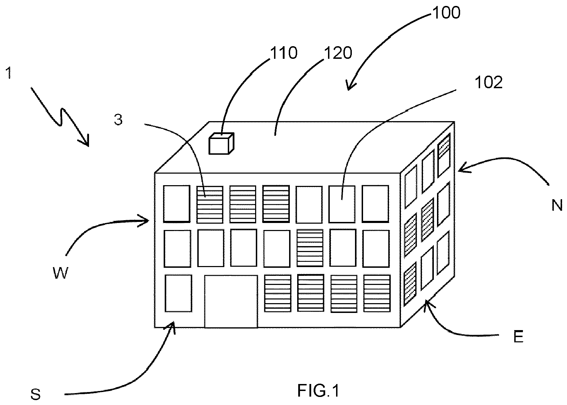

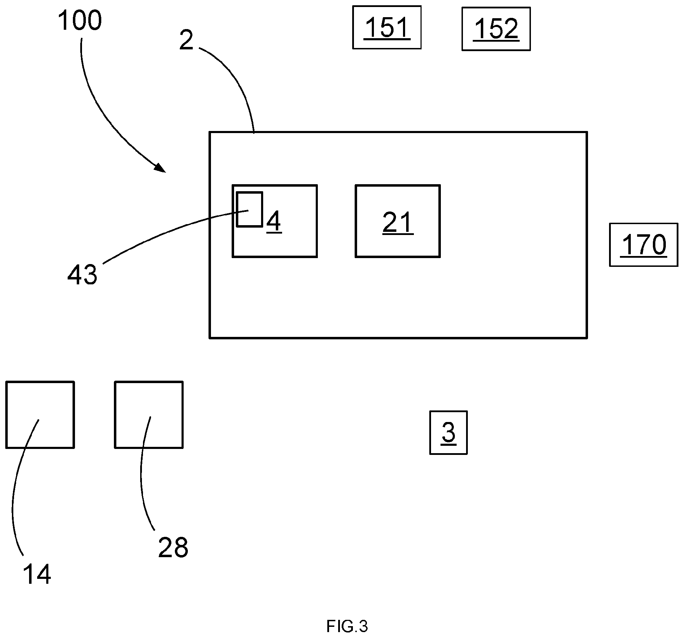

L'invention est ci-après décrite appliquée à la réalisation d'une installation domotique 100 représentée schématiquement sur les figures 1 et 3.

L'installation domotique 100 équipe un bâtiment 1 comprenant une enveloppe 120. L'enveloppe 120 délimite un ou plusieurs locaux ou pièces.

L'installation domotique comprend des appareils domotiques 3 liés à l'enveloppe du bâtiment, par exemple 8 appareils domotiques de type store 3 comme représenté schématiquement sur la figure 1. Ces appareils sont avantageusement motorisés. Le bâtiment domotique 1 est encore équipé d'autres équipements dits actifs, par exemple d'un système 110 de chauffage et/ou de climatisation, tel qu'un ensemble de chaudière, pompe à chaleur et de diffuseurs tels que des radiateurs ou des évents. Ce système peut faire partie de l'installation domotique. Ces équipements actifs dans le bâtiment sont distincts des appareils domotiques liés à l'enveloppe du bâtiment.

Le bâtiment 1 (par exemple un bâtiment tertiaire), représenté sur la figure 1, comprend une pluralité d'ouvertures (notamment des fenêtres) 102 disposées sur des façades S, E, N, W (ces deux dernières n'étant pas visibles) appartenant à l'enveloppe du bâtiment 1. Les ouvertures 102 sont équipées des appareils domotiques 3, en particulier d'écrans mobiles 3, notamment des écrans de fermeture, d'occultation ou de protection solaire, une partie de ceux-ci étant représentée en position fermée par des hachures horizontales sur les façades S et E.

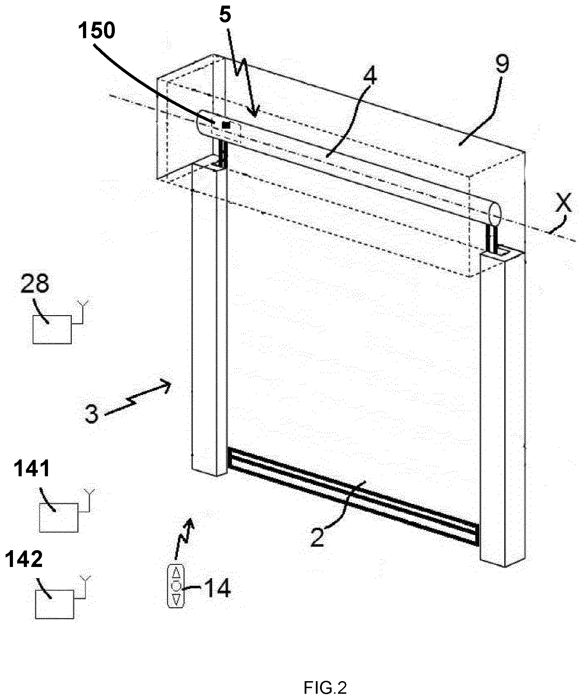

Comme représenté sur la figure 2, les écrans de protection solaire mobiles sont chacun pilotés par un actionneur 150, ce dernier permettant la fermeture et l'ouverture automatisée de l'écran, obturant ou non ainsi l'ouverture à laquelle l'écran est lié. Les actionneurs sont généralement placés en hauteur, masqués dans des rails ou des caissons 9 lorsqu'ils sont installés et sont alors difficilement accessibles par l'intérieur ou l'extérieur du bâtiment.

L'automatisation du bâtiment, notamment le pilotage automatisé des écrans via leurs actionneurs 150, basée sur la présence de dispositifs de commande tels qu'un moyen de commande central 28, des moyens de commande locaux 14 et/ou des capteurs divers 151 (capteurs de présence, de luminosité, de température, etc), permet de gérer des paramètres du bâtiment notamment des paramètres de confort thermique ou de confort visuel dans le bâtiment. Pour cela, différents appareils domotiques et dispositifs de commande (actionneurs, moyens de commande, capteurs) peuvent communiquer entre eux par le biais de réseaux NTW sans fil (radio notamment) ou filaires (bus câblés, courants porteurs).

Le terme d'actionneur utilisé dans cette demande inclut notamment la partie électronique ou électromécanique permettant le contrôle du mouvement de l'écran ou le contrôle d'état d'une charge, par exemple d'une lampe, mais également les moyens électroniques de dialogue avec les différents autres dispositifs ou équipements de l'installation.

L'installation 1 peut aussi comprendre une passerelle et/ou une box domotique 170 permettant une communication vers d'autres dispositifs à l'intérieur ou à l'extérieur du bâtiment, par exemple un ordinateur ou un téléphone intelligent ou des structures de stockage de données, éventuellement au travers d'un réseau Internet.

Les ouvertures peuvent elles-mêmes être des ouvrants (fenêtres ou portes), notamment des ouvrants motorisés.

Les ouvertures comprennent au moins un cadre dormant et au moins un panneau mobile tel qu'une vitre. Le panneau mobile est disposé à l'intérieur du cadre dormant, en particulier dans une configuration assemblée et fermée d'une fenêtre. Avantageusement, la vitre peut être :
- soit montée dans le cadre dormant, dans le cas où celle-ci est fixe par rapport au cadre dormant,
- soit montée dans un cadre de l'ouvrant, dans le cas où celle-ci est mobile par rapport au cadre dormant, en particulier selon un mouvement de rotation, notamment dans le cas d'une fenêtre oscillante ou battante, ou selon un mouvement de translation, notamment dans le cas d'une fenêtre coulissante selon une direction horizontale ou verticale, ou selon deux mouvements de rotation, notamment dans le cas d'une fenêtre oscillo-battante.
Un store 3 peut être placé à l'intérieur ou à l'extérieur de l'enveloppe du bâtiment, autrement dit, du côté intérieur ou extérieur du cadre dormant.

Lorsque les écrans sont disposés à l'extérieur du bâtiment 1, cette configuration permet de maximiser leur influence thermique. En variante, les écrans peuvent être disposés à l'intérieur du bâtiment 1, cette configuration permettant de facilement gérer le confort visuel.

L'invention est ici décrite appliquée à des stores, mais peut s'appliquer à tout type de dispositif d'occultation et plus généralement à tout appareil domotique ayant une influence sur le bilan thermique du bâtiment.

Chaque store comprend un dispositif d'entraînement motorisé 5. Le dispositif d'entraînement motorisé comprend au moins un actionneur électromécanique 150.

Avantageusement, le store comprend, en outre, un tube d'enroulement 4. L'écran 2 est enroulable sur le tube d'enroulement 4. En outre, le tube d'enroulement 4 est agencé de sorte à être entraîné en rotation par l'actionneur électromécanique 150.

Ainsi, l'écran 2 du store est enroulé sur le tube d'enroulement 4 ou déroulé autour de celui-ci, le tube d'enroulement 4 étant entraîné par le dispositif d'entraînement motorisé 5, en particulier par l'actionneur électromécanique 150.

De cette manière, l'écran 2 est mobile entre une position enroulée, en particulier haute, et une position déroulée (représentée sur la figure 2), en particulier basse, et inversement.

L'écran 2 du store 3 est un écran de fermeture, d'occultation et/ou de protection solaire, s'enroulant et se déroulant autour du tube d'enroulement 4, dont le diamètre intérieur est supérieur au diamètre externe de l'actionneur électromécanique 150, de sorte que l'actionneur électromécanique peut être inséré dans le tube d'enroulement, lors de l'assemblage du store.

L'actionneur électromécanique 150, en particulier de type tubulaire, permet de mettre en rotation le tube d'enroulement 4 autour d'un axe de rotation X, de sorte à déplacer, en particulier dérouler ou enrouler, l'écran du store.

Dans un état monté du store, l'actionneur électromécanique est inséré dans le tube d'enroulement.

De manière connue, le store peut comporter un tablier comprenant une toile formant l'écran du store, le tablier étant suspendu depuis le tube d'enroulement.

L'écran est configuré pour être déplacé, au moyen du dispositif d'entraînement motorisé 5, en particulier de l'actionneur électromécanique 150, entre une position ouverte, correspondant à la position enroulée et pouvant également être appelée première position de fin de course ou position de fin de course haute FdCH, et une position fermée, correspondant à la position déroulée et pouvant également être appelée deuxième position de fin de course ou position de fin de course basse FdCB.

Ainsi, l'actionneur électromécanique 150 est configuré pour entraîner, autrement dit entraîne, en déplacement l'écran, entre la première position de fin de course FdCH et la deuxième position de fin de course FdCB, et inversement, en vis-à-vis de la fenêtre, en particulier de la vitre.

Avantageusement, le dispositif d'entraînement motorisé est commandé par une unité de commande 28, 14. L'unité de commande peut être, par exemple, une unité de commande locale 14 ou une unité de commande centrale 28. Cette ou ces unités de commande font partie de l'installation domotique 100.

Avantageusement, l'unité de commande locale peut être reliée, en liaison filaire ou non filaire, avec l'unité de commande centrale.

Avantageusement, l'unité de commande centrale 28 peut piloter l'unité de commande locale 14, ainsi que d'autres unités de commande locales 141, 142 similaires et réparties dans le bâtiment 1.

Le dispositif d'entraînement motorisé est, de préférence, configuré pour exécuter les commandes de déroulement ou d'enroulement de l'écran du store, pouvant être émises, notamment, par l'unité de commande locale ou l'unité de commande centrale.

Avantageusement, l'installation 100 peut comprendre, en outre, des capteurs 151, notamment au moins un capteur de température interne du bâtiment.

Outre les éléments déjà mentionnés, l'installation domotique 100 peut comprendre un système 2 de gestion de l'installation domotique. Ce système de gestion comprend notamment un calculateur 4 et une mémoire 21.

De préférence, le calculateur 4 comprend un module 43 de logique à réseau de neurones artificiels. En particulier, le réseau de neurones artificiels peut être du type perceptron multicouche (multilayer perceptron, MLP) ou du type convolutif (convolution neural network, CNN).

Dans toute cette demande, on entend par « réseau de neurones artificiels », un modèle d'apprentissage automatique pouvant être représenté par une fonction paramétrique comprenant une succession d'opérations linéaires (multiplication par un scalaire couramment appelé « poids ») et/ou d'opérations non linéaires (d'application d'une fonction dite « d'activation », par exemple Sigmoïde, Heaviside, Tangente Hyperbolique, Relu, etc.), ces opérations étant regroupées en « couches ». Un certain nombre d'architectures de réseau de neurones artificiels prédéfinis peuvent être utilisés pour créer un réseau de neurones artificiels, notamment les perceptrons multicouche (en anglais Multilayer Perceptron) abrégé MLP, ou bien les réseaux de neurones à convolution (en anglais Convolutional Neural Network) abrégé CNN.

Le système de gestion 2 est relié, de manière filaire ou non filaire, à tout ou partie des éléments suivants :
- au moins un capteur de température interne au bâtiment 151, éventuellement plusieurs capteurs de température permettant de mesurer la température dans le bâtiment en différents lieux du bâtiment ou à l'extérieur du bâtiment, et/ou
- une interface homme-machine 152 présentant notamment un écran et/ou un clavier, en particulier présentant un écran tactile, et/ou
- au moins un appareil domotique 3, et/ou
- une passerelle ou une box domotique 170, et/ou
- une ou plusieurs unités de commande 14, 28.

De manière préférée, le système de gestion 2 peut consister en :
- la passerelle ou la box domotique 170, ou
- une unité de commande 14, 28.

Alternativement encore, le système de gestion 2 peut être inclus dans :
- la passerelle ou la box domotique 170, ou
- une unité de commande 14, 28, ou
- l'appareil domotique 3.

Le système de gestion 2 peut aussi être constitué par des éléments tels que :
- un ordinateur portable, tel que par exemple une tablette ou un téléphone, notamment un smartphone, ou
- un serveur, notamment un serveur distant connecté au réseau internet.

En alternative encore, le système de gestion 2 peut être constitué par une architecture distribuée sur plusieurs éléments, notamment plusieurs éléments précités. Par exemple, typiquement, le système de gestion peut comprendre une interface homme-machine sur un équipement local et des moyens de calcul sur un équipement distant.

Le système de gestion, en particulier la mémoire 21 et/ou l'unité logique de traitement 4 ou calculateur 4, comprend tous les éléments matériels et/ou logiciels permettant de mettre en oeuvre les procédés objets de ce document, en particulier les procédés décrits ci-après. Ces éléments peuvent comprendre des moyens logiciels.

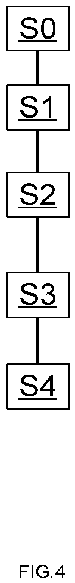

Un mode d'exécution d'un procédé de gestion de l'installation domotique 100 équipant le bâtiment 1 est décrit ci-après en référence aux figures 4 à 6.

Le procédé comprend de préférence :
- une étape préalable S0 de configuration du calculateur 4 du système de gestion 2.
- une première étape S1 d'acquisition de données de température mesurées par le capteur 151,
- une deuxième étape S2 d'analyse des données de température,
- une troisième étape S3 de détermination de l'état de fonctionnement du système 110 de chauffage et/ou de climatisation du bâtiment, et
- une quatrième étape S4 de commande d'au moins un appareil domotique 3 en fonction du résultat de la troisième étape S3 de détermination de l'état de fonctionnement du système 110 de chauffage et/ou de climatisation du bâtiment.

Dans l'étape préalable S0, on configure le calculateur 4 de l'installation domotique 100 ou du capteur domotique 151 ou de l'appareil domotique 3 ou du système de gestion 2, le calculateur embarquant le module 43 de logique à réseau de neurones artificiels. Cette configuration est un apprentissage où l'on configure le réseau de neurones de sorte qu'il puisse ensuite déterminer, de la manière la plus précise possible, l'état de fonctionnement (actif/inactif) du système 110 de chauffage et/ou de climatisation. Ce procédé comprend des itérations de :
- fonctionnement du réseau de neurones alimenté par des données de températures internes au bâtiment, et
- fonctionnement d'un système de référence donnant en permanence l'état de fonctionnement (actif/inactif) du système 110 de chauffage et/ou de climatisation.

Comme il sera vu plus bas, le système de référence peut être un système physique et concret ou un système simulé ou modélisé.

Pour chaque itération :
- le fonctionnement du réseau de neurones fournit une probabilité d'état de fonctionnement du système 110 de chauffage et/ou de climatisation, et
- le fonctionnement du système de référence fournit l'état de fonctionnement effectif du système 110 de chauffage et/ou de climatisation.
En cas d'incohérence des résultats, par exemple si le système 110 de chauffage et/ou de climatisation est actif et si la probabilité de fonctionnement est inférieure à 60%, on en déduit que le réseau de neurones est mal configuré et on modifie en conséquence ses paramètres de fonctionnement. Par exemple, on modifie :
- une pondération d'un paramètre du réseau de neurones ou des pondérations de plusieurs paramètres du réseau de neurones, ou
- une pondération d'une fonction d'activation du réseau de neurones ou des pondérations de plusieurs fonctions d'activation du réseau de neurones.

Ces étapes itératives sont mises en oeuvre jusqu'à ce que le réseau de neurones soit correctement configuré. Ceci peut être considéré comme étant le cas lorsqu'un nombre donné d'itérations ont été effectuées et/ou lorsque la fréquence des incohérences mentionnées précédemment est inférieure à un seuil donné.

Ce procédé de configuration est par exemple mis en oeuvre sur un modèle simulé du bâtiment où doit être ensuite utilisé le système de gestion et où doit être mis en oeuvre le procédé de gestion. Dans un tel cas, on modélise l'environnement d'un bâtiment, ce bâtiment et les appareils et les équipements. On simule également des scénarios de chauffage et de refroidissement et les signaux que produisent des capteurs virtuels afin d'alimenter le réseau de neurones en données. Au final, on compare, pendant toute la durée de ces scénarios, la cohérence entre :
- la probabilité d'état de fonctionnement du système 110 de chauffage et/ou de climatisation donné par le réseau de neurones, et
- l'état de fonctionnement effectif du système 110 de chauffage et/ou de climatisation simulé dans le modèle.

En alternative, le procédé de configuration peut être mis en oeuvre dans un bâtiment de référence où a été installé le système de gestion exclusivement pour la réalisation de la configuration. Dans un tel cas, on met en fonctionnement le réseau de neurones et le système 110 de chauffage et/ou de climatisation. On compare pendant une durée de fonctionnement donnée la cohérence entre :
- la probabilité d'état de fonctionnement du système 110 de chauffage et/ou de climatisation donné par le réseau de neurones, et
- l'état de fonctionnement effectif du système 110 de chauffage et/ou de climatisation.

Dans la première étape S1, on acquiert des données de température mesurées par le capteur 151. Ces valeurs sont mesurées au niveau d'un ou plusieurs capteurs disposés à l'intérieur du bâtiment, en particulier dans la pièce du bâtiment où se trouve un appareil à commander par le système de gestion 2. De préférence, un capteur de température peut être prévu dans chaque pièce du bâtiment. Ainsi, en cas d'utilisation de plusieurs capteurs, ces capteurs sont disposés en plusieurs lieux du bâtiment.

De préférence, on acquiert des séries de mesures de température. Ces mesures sont réalisées à une fréquence donnée, par exemple toutes les 15 min. Par ailleurs, ces mesures sont réalisées pendant une période donnée, par exemple une période de 2 heures. En conséquence, une série de mesures de température est par exemple une série de 9 valeurs de températures mesurées avec une période d'échantillonnage de 15 min. En cas d'utilisation de plusieurs capteurs, chaque série de mesure est relative à un unique capteur.

Ces séries de mesures sont transmises du ou des capteurs 151 au système de gestion 2, notamment par voie filaire ou par voie non filaire.

Dans la deuxième étape S2, on analyse les données de température obtenues à l'étape précédente. Cette analyse est effectuée par le système de gestion 2, en particulier par le calculateur 4, notamment par le module 43 de logique à réseau de neurones artificiels.

L'analyse est effectuée de sorte à obtenir, en utilisant uniquement ou exclusivement des informations de températures mesurées :
- une probabilité pa d'état actif du système 110 de chauffage et/ou de climatisation, c'est-à-dire la probabilité que le système 110 de chauffage et/ou de climatisation est actuellement en train de consommer de l'énergie pour agir sur l'état thermique du bâtiment, et/ou
- une probabilité pb d'état inactif du système 110 de chauffage et/ou de climatisation, c'est-à-dire la probabilité que le système 110 de chauffage et/ou de climatisation n'est actuellement pas en train de consommer de l'énergie pour agir sur l'état thermique du bâtiment, et/ou
- une probabilité pc d'état indéterminé du système 110 de chauffage et/ou de climatisation, c'est-à-dire la probabilité pc complémentaire aux probabilités pa et pb, tels que pa + pb + pc = 1.

Comme vu précédemment, de préférence, l'analyse est effectuée par traitement, par le réseau de neurones artificiels, des données de température mesurées. L'analyse comprend l'exécution de fonctions d'activation du réseau de neurones artificiels à partir des données d'entrées qui sont les données de températures internes au bâtiment.

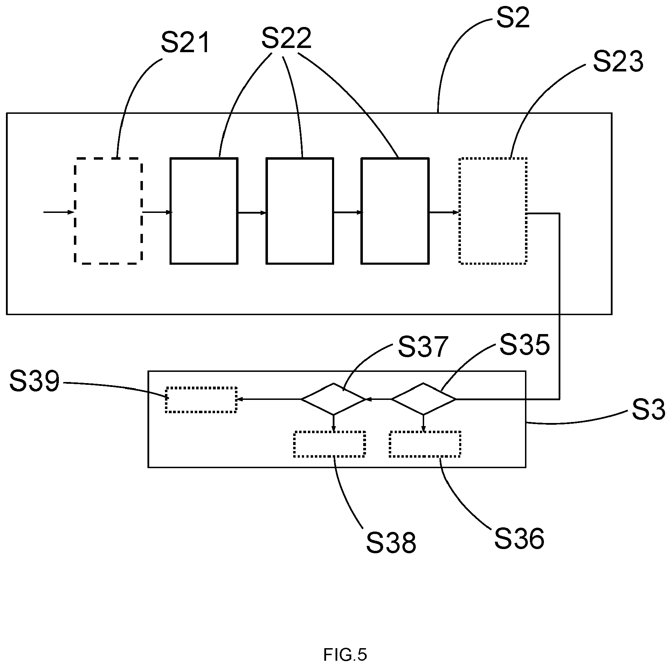

Dans le cas où le réseau de neurones artificiels est du type perceptron multicouche, le réseau de neurones artificiels comprend comme représenté sur la figure 5 :
- des couches cachées S22 mettant en oeuvre des fonctions d'activation de type non-linéaires, telles que la fonction ReLU, et/ou
- une couche de sortie S23 mettant en oeuvre une fonction d'activation de type non linéaire, telle que la fonction connue Sigmoïde.

La fonction (f) ReLU (pour Rectified Linear Unit) ou Unité Linéaire Rectifiée est définie par f(x)=max(0,x) pour tout réel x.

La couche d'entrée (input layer) S21 du réseau de neurones peut présenter une taille égale à 15 avec au moins une parmi les caractéristiques qui suivent (basées sur la température intérieure et permettant de définir le comportement de la température intérieure pendant la période):
- la température médiane des enregistrements effectués pendant la période,
- la température moyenne des enregistrements effectués pendant la période,
- la pente d'une droite de régression des enregistrements effectués pendant la période,
- le premier et le deuxième coefficient d'un polynôme de régression d'ordre 2 des enregistrements effectués pendant la période (dans l'équation y = ax² + bx + c, les coefficients a et b),
- la différence des températures entre 5^{e} centile et le 25^{e} centile des enregistrements effectués pendant la période,
- la différence des températures entre 5^{e} centile et le 50^{e} centile des enregistrements effectués pendant la période,
- la différence des températures entre 5^{e} centile et le 75^{e} centile des enregistrements effectués pendant la période,
- la différence des températures entre 5^{e} centile et le 95^{e} centile des enregistrements effectués pendant la période,
- la différence des températures entre 25^{e} centile et le 50^{e} centile des enregistrements effectués pendant la période,
- la différence des températures entre 25^{e} centile et le 75^{e} centile des enregistrements effectués pendant la période,
- la différence des températures entre 25^{e} centile et le 95^{e} centile des enregistrements effectués pendant la période,
- la différence des températures entre 50^{e} centile et le 75^{e} centile des enregistrements effectués pendant la période,
- la différence des températures entre 50^{e} centile et le 95^{e} centile des enregistrements effectués pendant la période,
- la différence des températures entre 75^{e} centile et le 95^{e} centile des enregistrements effectués pendant la période.

Les couches cachées (hidden layers) du réseau de neurones sont paramétrables pour maximiser la performance du système sans pour autant avoir un grand réseau qui serait consommateur de ressources de stockage mémoire et de ressources de calcul. Par exemple, le nombre de neurones maximum par couche est inférieur ou égal à 20. De préférence encore, le nombre de couches cachées total ne dépasse pas 3 ou 4 ou 5.

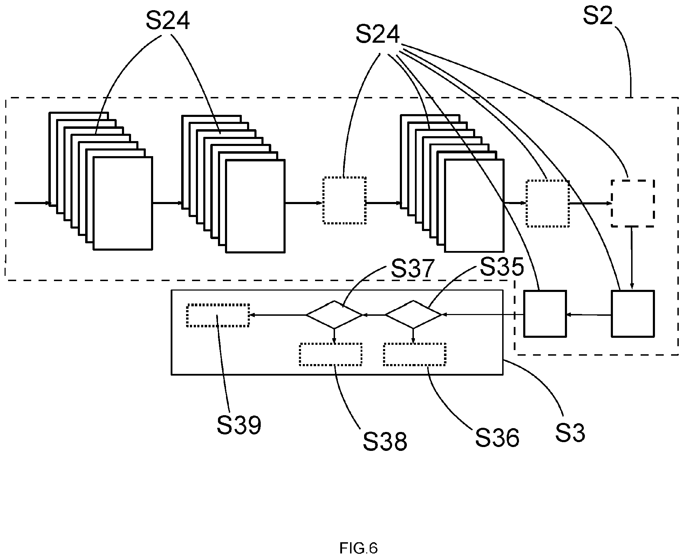

En alternative, le réseau de neurones artificiels peut être du type convolutif comme représenté sur la figure 6 et comprenant différents traitements mathématiques S24, en particulier des traitements de filtrages.

En sortie du réseau de neurones artificiel, on obtient par exemple une unique valeur de probabilité, de préférence la valeur de probabilité pa d'état actif du système 110 de chauffage et/ou de climatisation. En résumé, dans cette deuxième étape, on détermine la valeur de probabilité en analysant les variations d'une température interne au bâtiment sur une période donnée.

En alternative encore, le réseau de neurones artificiels peut être du type utilisant des arbres de décisions, en particulier du type forêts aléatoires (Random Forest Classifier). Dans un tel réseau de neurones artificiels, on utilise une combinaison multiple d'arbres de décision pour créer un modèle de prédiction fiable et solide.

De préférence, l'analyse des données peut être réalisée sur différents intervalles de temps, notamment sur des intervalles de 60 min, 120 min et 180 min. Avantageusement, dans cette analyse, on associe aux données de température dans ces intervalles temporels des variables mathématiques telles que moyenne, maximum, minimum, déviation, pente, différence entre percentiles, variance.

Dans la troisième étape S3, on détermine l'état de fonctionnement du système 110 de chauffage et/ou de climatisation du bâtiment. Cette détermination est de préférence réalisée par le calculateur 4. Pour ce faire, le résultat de probabilité obtenu en sortie du réseau de neurones est comparé à au moins un seuil et, en fonction de cette comparaison, on détermine l'état de fonctionnement du système 110 de chauffage et/ou de climatisation.

Par exemple, comme représenté aux figures 5 et 6, dans une étape S35, on teste si la probabilité obtenue en sortie du réseau de neurones est supérieure à un premier seuil, par exemple 60%. Si tel est le cas, on considère que l'état du système 110 de chauffage et/ou de climatisation est actif dans une étape S36.

Si tel n'est pas le cas, on passe à une étape S37 dans laquelle on teste si la probabilité obtenue en sortie du réseau de neurones est inférieure à un deuxième seuil, par exemple 40%. Si tel est le cas, on considère que l'état du système 110 de chauffage et/ou de climatisation est non-actif dans une étape S38.

Si tel n'est pas le cas, on passe à une étape S39 dans laquelle on considère que l'état du système 110 de chauffage et/ou de climatisation est indéterminé.

Dans une logique alternative, on peut réaliser deux classifications ou déterminations successives, en utilisant par exemple un modèle de type « Un contre Tous » (ou One-vs-Rest en terminologie anglaise). Par exemple, dans une première sous-étape, on détermine si l'état du système 110 de chauffage est :
- actif, ou
- n'est pas actif (cas où [i] le système 110 de climatisation est actif ou [ii] ni le système 110 de climatisation est actif, ni le système 110 de chauffage est actif).
Puis, par exemple, dans une deuxième sous-étape, on détermine si l'état du système 110 de climatisation est :
- actif, ou
- n'est pas actif (cas où ni le système 110 de climatisation est actif, ni le système 110 de chauffage est actif, soit une absence de régulation).
Afin d'améliorer la fiabilité de la prédiction, on met d'abord en oeuvre la sous-étape dont la détermination est la plus précise ou la plus fiable.

Au final, quelle que soit la logique retenue, dans l'étape S3, on détermine de préférence :
- une probabilité d'état actif du système 110 de chauffage, et/ou
- une probabilité d'état actif du système 110 de climatisation, et/ou
- une probabilité d'état inactif du système 110 de chauffage, et/ou
- une probabilité d'état inactif du système 110 de climatisation, et/ou
- une probabilité d'indétermination d'état actif ou non actif du système 110 de chauffage, et/ou
- une probabilité d'indétermination d'état actif ou non actif du système 110 de climatisation.

Dans une quatrième étape S4, on commande au moins un appareil domotique 3 en fonction du résultat de la troisième étape S3 de détermination de l'état de fonctionnement du système 110 de chauffage et/ou de climatisation du bâtiment. La commande peut être émise par l'une des unités de commande 14, 28 ou par la box domotique 170 ou par le capteur 151. Cet ordre ne sera exécuté qu'après validation par le système de gestion 2.

Par exemple, alors qu'un store extérieur 3 est fermé, imaginons qu'un ordre d'ouverture du store 3 est émis à destination du store en journée, l'été. Dans une telle situation, le système de gestion 2 analyse l'état de fonctionnement du système 110 de chauffage et/ou de climatisation. Si le système de climatisation est actif ou si son état est indéterminé, l'exécution de l'ordre sera interdite et sinon l'exécution de l'ordre sera autorisée.

Dans un autre exemple, alors qu'un store extérieur 3 est ouvert, imaginons qu'un ordre de fermeture du store 3 est émis à destination du store en journée, l'hiver. Dans une telle situation, le système de gestion 2 analyse l'état de fonctionnement du système 110 de chauffage et/ou de climatisation. Si le système de chauffage est actif ou si son état est indéterminé, l'exécution de l'ordre sera interdite et sinon l'exécution de l'ordre sera autorisée.

Le système de gestion permet également de définir l'envoi d'ordres automatiques en fonction de l'état actif ou non du système 110 de chauffage et/ou de climatisation et de la température intérieure. Ces ordres automatiques peuvent par exemple être générés par le système de gestion en utilisant les données fournies par le ou les capteurs 151 et en tenant compte de l'état déterminé du système 110 de chauffage et/ou de climatisation. Ces ordres automatiques visent par exemple à rendre inutile ou à réduire l'utilisation du système de chauffage et/ou de climatisation sur au moins certaines périodes et donc à contribuer à une réduction d'énergie globale consommée.

De cette manière, la consommation d'énergie utilisée par le système 110 de chauffage et/ou de climatisation peut être minimisée tout en utilisant des moyens matériels extrêmement simple puisqu'il suffit d'analyser uniquement des températures mesurées dans le bâtiment pour déterminer l'état de fonctionnement du système 110 de chauffage et/ou de climatisation et d'agir sur les appareils domotiques passifs permettant indirectement de réduire l'utilisation ou de rendre inutile l'utilisation du système 110 de chauffage et/ou de climatisation sur au moins certaines périodes.

Comme vu précédemment, l'invention porte aussi, en tant que tel, sur un procédé de configuration du calculateur 4 d'une installation domotique 100 ou du capteur domotique 151 ou de l'appareil domotique 3 ou du système de gestion 2, le calculateur embarquant le module 43 de logique à réseau de neurones artificiels. Ce procédé comprend des itérations de :
- fonctionnement du réseau de neurones alimenté par des données de températures, et
- fonctionnement d'un système de référence donnant en permanence l'état de fonctionnement (actif/inactif) du système 110 de chauffage et/ou de climatisation.

Pour chaque itération :
- le fonctionnement du réseau de neurones fournit une probabilité d'état de fonctionnement du système 110 de chauffage et/ou de climatisation, et
- le fonctionnement du système de référence fournit l'état de fonctionnement effectif du système 110 de chauffage et/ou de climatisation.
En cas d'incohérence des résultats, par exemple si le système 110 de chauffage et/ou de climatisation est actif et si la probabilité de fonctionnement est inférieure à 60%, on en déduit que le réseau de neurones est mal configuré et on modifie en conséquence ses paramètres de fonctionnement, notamment par exemple des pondérations affectées à certains paramètres ou aux fonctions d'activation.

Ces étapes itératives sont mises en oeuvre jusqu'à ce que le réseau de neurones soit correctement configuré. Ceci peut être considéré comme étant le cas lorsqu'un nombre donné d'itérations ont été effectuées et/ou lorsque la fréquence des incohérences mentionnées précédemment est inférieure à un seuil donné.

Ce procédé de configuration est par exemple mis en oeuvre sur un modèle simulé du bâtiment où doit être ensuite utilisé le système de gestion et où doit être mis en oeuvre le procédé de gestion.

En alternative, le procédé de configuration peut être mis en oeuvre dans bâtiment de référence où a été installé le système de gestion exclusivement pour la réalisation de la configuration.

En alternative encore, le procédé de configuration peut être mis en oeuvre dans modèle simulé d'un bâtiment de référence où l'on simule également la mise en place du système de gestion pour la réalisation de la configuration.

## Revendications

1. Procédé de configuration d'un calculateur (4) d'une installation domotique (100) ou d'un capteur domotique ou d'un appareil domotique (3) ou d'un système de gestion (2), le calculateur embarquant un module (43) de logique à réseau de neurones artificiels, le procédé comprenant :
- une étape de fonctionnement du réseau de neurones alimenté par des données de températures,
- une étape de fonctionnement d'un système de référence donnant un état de fonctionnement d'un système (110) de chauffage et/ou de climatisation, et
- une étape de modification de paramètres de fonctionnement du réseau de neurones en fonction de l'état de fonctionnement du système (110) de chauffage et/ou de climatisation donné par le système de référence.

2. Procédé de gestion d'une installation domotique (100) équipant un bâtiment (1) et comprenant au moins un appareil domotique (3) lié à une enveloppe du bâtiment, comme un appareil de fermeture, d'occultation, de protection solaire ou d'écran, le bâtiment étant équipé :
- d'un capteur (151) de température interne au bâtiment, et
- d'un système (110) de chauffage et/ou de climatisation du bâtiment,
le procédé comprenant :
- une étape (S1) d'acquisition de données de température mesurées par le capteur (151),
- une étape (S2) d'analyse des données de température,
- une étape (S3) de détermination d'un état de fonctionnement du système (110) de chauffage et/ou de climatisation du bâtiment, et
- une étape (S4) de commande de l'au moins un appareil domotique en fonction du résultat de l'étape (S3) de détermination de l'état de fonctionnement du système (110) de chauffage et/ou de climatisation du bâtiment.

3. Procédé de gestion selon la revendication 2, **caractérisé en ce que** l'étape d'analyse (S2) comprend le traitement, par un module (43) de logique à réseau de neurones artificiels, des données de température mesurées.

4. Procédé de gestion selon la revendication 3, **caractérisé en ce que** le réseau de neurones artificiels est du type perceptron multicouche ou du type forêts aléatoires (Random Forest Classifier).

5. Procédé de gestion selon la revendication 4, **caractérisé en ce que** le réseau de neurones artificiels comprend :
- des couches cachées mettant en oeuvre des fonctions d'activation de type ReLU, et/ou
- une couche de sortie mettant en oeuvre une fonction d'activation de type sigmoïde.

6. Procédé de gestion selon l'une des revendications 2 à 5, **caractérisé en ce que** l'étape de détermination (S3) est configurée de sorte à obtenir :
- une probabilité d'état actif du système (110) de chauffage et/ou de climatisation, et/ou
- une probabilité d'état inactif du système (110) de chauffage et/ou de climatisation, et/ou
- une probabilité d'indétermination d'état actif ou non actif du système (110) de chauffage et/ou de climatisation.

7. Procédé de gestion selon l'une des revendications 2 à 6, **caractérisé en ce que** l'étape (S3) de détermination comprend une comparaison d'une probabilité d'état du système (110) de chauffage et/ou de climatisation à un seuil et **en ce que** l'état du système (110) de chauffage et/ou de climatisation est considéré comme actif ou non actif en fonction du résultat de la comparaison.

8. Procédé de gestion selon l'une des revendications 2 à 7, **caractérisé en ce que** l'étape (S3) de détermination comprend la détermination de :
- une probabilité d'état actif du système (110) de chauffage, et/ou
- une probabilité d'état actif du système (110) de climatisation, et/ou
- une probabilité d'état inactif du système (110) de chauffage, et/ou
- une probabilité d'état inactif du système (110) de climatisation, et/ou
- une probabilité d'indétermination d'état actif ou non actif du système (110) de chauffage, et/ou
- une probabilité d'indétermination d'état actif ou non actif du système (110) de climatisation.

9. Procédé de gestion selon l'une des revendications 2 à 8, **caractérisé en ce que** l'étape (S2) d'analyse des données de température comprend l'analyse des données sur différents intervalles de temps, notamment sur des intervalles de 60 min, 120 min et 180 min.

10. Procédé de gestion selon l'une des revendications 2 à 9, **caractérisé en ce que** le procédé comprend en outre une étape initiale (S0) de mise en oeuvre du procédé de configuration selon la revendication 1.

11. Procédé de gestion selon l'une des revendications 2 à 10, **caractérisé en ce que**, dans l'étape (S1) d'acquisition de données de température, les données de températures acquises sont mesurées par plusieurs capteurs disposés en différents lieux du bâtiment.

12. Calculateur (4) configuré par la mise en oeuvre du procédé selon la revendication 1.

13. Système de gestion (2) d'une installation domotique (100), le système de gestion comprenant des moyens (4, 43, 21) de mettre en oeuvre le procédé de gestion selon l'une des revendications 2 à 11 et/ou le procédé de configuration selon la revendication 1.

14. Installation domotique (100) comprenant un système de gestion (2) selon la revendication précédente.

15. Support d'enregistrement lisible par ordinateur comprenant des instructions qui, lorsqu'elles sont exécutées par un ordinateur, conduisent celui-ci à mettre en oeuvre le procédé de gestion défini par l'une des revendications 2 à 11 et/ou le procédé de configuration défini par la revendication 1.
